# FASCICULE DE BREVET EUROPEEN

(11) **EP 3 300 232 B1**
(45) Date de publication et mention de la délivrance du brevet: **11.05.2022**
(21) Numéro de dépôt: 17182113.5
(22) Date de dépôt: 19.07.2017
(51) Int. Cl.: H02K 29/08, H02K 11/215, B60S 1/08, G01R 15/20

(54) **MOTEUR ÉLECTRIQUE A COURANT CONTINU SANS BALAIS POUR SYSTEME D'ESSUYAGE DE VÉHICULE AUTOMOBILE**
GLEICHSTROM-ELEKTROMOTOR OHNE WISCHBLÄTTER FÜR SCHEIBENREINIGUNGSSYSTEM EINES KRAFTFAHRZEUGS
BRUSHLESS DC ELECTRIC MOTOR FOR AUTOMOTIVE VEHICLE WIPER SYSTEM

(30) Priorité: 22.09.2016 FR 1658929
(43) Date de publication de la demande: 28.03.2018
(73) Titulaire: Valeo Systèmes d'Essuyage, 78322 Le Mesnil Saint Denis (FR)
(72) Inventeur: HERRADA, Jose-Luis, 78322 Le Mesnil Saint Denis (FR)
(74) Mandataire: Valeo Visibility

(56) Documents cités:
- EP-A1- 0 474 904
- EP-A1- 0 723 136
- EP-A2- 0 212 662
- DE-A1-102012 105 748
- DE-U1- 29 901 686
- DE-U1- 29 901 686
- JP-A- H0 634 390
- US-A- 4 319 188
- US-A1- 2015 002 001

## Description

L'invention a pour objet un moteur électrique à courant continu sans balais pour système d'essuyage de véhicule automobile.

Il est connu qu'un tel moteur électrique comporte principalement un rotor et un stator.

Généralement, le stator comprend une pluralité de bobines d'excitation électromagnétique du rotor tandis que le rotor comprend un aimant multipolaire, notamment un aimant comprenant deux pôles magnétiques opposés, nord et sud.

Le moteur électrique est configuré pour que, quand les bobines sont alimentées en courant électrique, un champ magnétique est créé, entrainant un mouvement de rotation de l'aimant multipolaire autour d'un axe de rotation.

Le moteur électrique est également pourvu d'un dispositif de détermination de position du rotor, ce qui permet d'assurer une commutation électronique de l'alimentation des bobines en fonction de l'angle du rotor, s'affranchissant de ce fait de la présence de balais.

L'installation du moteur électrique sans balais dans un système d'essuyage pour véhicule automobile nécessite de tenir compte de contraintes spatiales puisqu'il est souhaitable de réduire autant que possible l'encombrement du moteur électrique, en particulier dans le cas où le dispositif de détermination du rotor comprend plusieurs capteurs de position.

Les documents US 2015/0002001 A1, DE 102012105748 A1, EP 0723136 A1, DE 29901686 U1, EP 0474904 A1, EP 0212662 A2, et US 4,319,188 A et JP H06 34390 A illustrent des moteurs électriques selon l'état de la technique.

Le but de l'invention est de remédier au moins partiellement à cet inconvénient.

A cet effet, l'invention a pour objet un moteur électrique à courant continu sans balais pour système d'essuyage de véhicule automobile, comportant un stator et un rotor, le stator comprenant une pluralité de bobines d'excitation électromagnétique du rotor et le rotor comprenant un aimant multipolaire monté pour être animé d'un mouvement de rotation autour d'un axe de rotation et muni d'au moins trois couches axiales multipolaires, chaque couche axiale multipolaire se présentant sous la forme d'une couronne et ledit moteur électrique comprenant un arbre moteur qui traverse chaque couronne en son centre, le moteur électrique comprenant un dispositif de détermination de position du rotor, ledit dispositif de détermination de position du rotor comprenant au moins trois capteurs de position de l'une desdites au moins trois couches axiales multipolaires, avec un centre de chaque capteur étant disposé respectivement dans un plan contenant une ligne médiane d'une couche axiale multipolaire, chaque capteur de position étant associé respectivement à l'une des couches axiales multipolaires, les capteurs de position étant installés dans un plan contenant une direction parallèle à l'axe de rotation de l'aimant multipolaire caractérisé en ce que lesdits capteurs de position sont disposés en un triangle (16), chacun des centres (15-1, 15-2, 15-3) des capteurs (9-1, 9-2, 9-) constituant un sommet du triangle (16), ledit triangle étant scalène ou isocèle.

Ainsi, grâce à la disposition des capteurs selon la présente invention, il est possible de réduire la taille, notamment l'épaisseur, des couches axiales multipolaires de l'aimant multipolaire tout en assurant le suivi de la position angulaire de chacune desdites couches axiales multipolaires, ce qui garantit un bon niveau de précision de la commutation électronique dans l'alimentation des bobines.

Selon différentes caractéristiques de l'invention qui pourront être prises seules ou en combinaison :
- ledit triangle est scalène aigu ;
- ledit triangle est isocèle aigu ;
- ledit moteur comprend une carte de circuit imprimé, les capteurs de position étant disposés sur ladite carte de circuit imprimé ;
- chaque couche axiale multipolaire comprend au moins une paire de pôles magnétiques nord et sud, de préférence trois paires de pôles nord et sud (soit six pôles magnétiques) ;
- les couches axiales multipolaires sont disposées de telle sorte qu'il existe un décalage angulaire entre les pôles nord et sud sur au moins deux couches axiales multipolaires successives, préférablement sur les trois couches axiales multipolaires successives ;
- les couches axiales multipolaires présentent une même épaisseur ;
- l'aimant multipolaire, qui comprend les couches axiales multipolaires successives, est un élément monobloc ;
- les couches axiales multipolaires sont respectivement formées par magnétisation de tronçons de l'élément monobloc ;
- les couches axiales multipolaires sont chacune formée par une pièce rapportée ;
- les pièces rapportées formant les couches axiales multipolaires sont identiques et disposées le long de l'axe de rotation avec un décalage angulaire entre les pôles nord et sud sur au moins deux couches axiales multipolaires successives, préférablement sur les trois couches multipolaires successives ;
- chaque capteur de position est un capteur à effet Hall.

L'invention a également pour objet un système d'essuyage pour véhicule automobile, comprenant un moteur électrique tel que décrit précédemment.

D'autres caractéristiques et avantages de l'invention apparaîtront à la lecture de la description qui va suivre. Celle-ci est purement illustrative et doit être lue en regard des dessins annexés sur lesquels :
- la figure 1 illustre une vue en perspective d'un moteur électrique selon la présente invention ;
- la figure 2 illustre une vue de détail de la figure 1.

### Moteur électrique

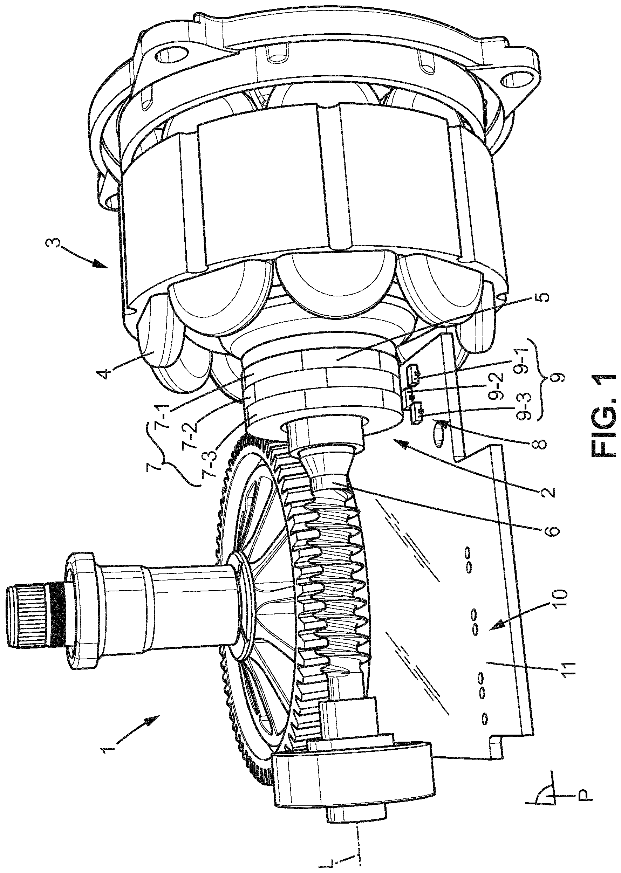

L'invention a pour objet un moteur électrique à courant continu sans balais pour système d'essuyage de véhicule automobile, référencé 1 dans la figure 1.

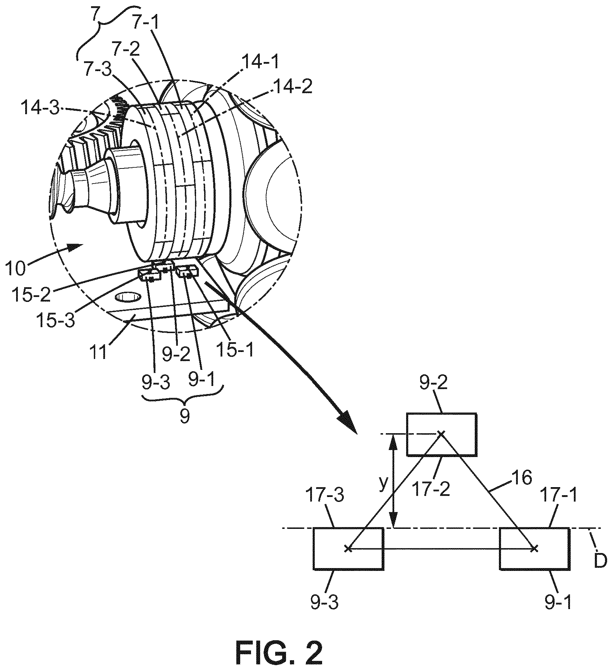

Comme visible sur les figures 1 et 2, le moteur électrique 1 comporte un rotor 2 et un stator 3.

Le stator 3 comprend une pluralité de bobines d'excitation électromagnétique 4 du rotor 2.

Le rotor 2 comprend un aimant multipolaire 5 monté pour être animé d'un mouvement de rotation autour d'un axe de rotation.

L'axe de rotation est appelé par la suite axe longitudinale, et référencé L.

Le moteur électrique 1 est configuré pour que le rotor 2 tourne dans le stator 3, ce qui entraine une rotation d'un arbre moteur 6 solidaire de l'aimant multipolaire 5.

L'arbre moteur 6 s'étend selon l'axe longitudinal L.

L'aimant multipolaire 5 est muni d'au moins trois couches axiales multipolaires 7.

Sur le mode de réalisation illustré, l'aimant multipolaire 5 comprend trois couches axiales multipolaires 7, référencées 7-1, 7-2 et 7-3.

Sur la figure 1, la couche axiale multipolaire 7-1 est disposée du côté du stator 3 tandis que la couche axiale multipolaire 7-3 est la plus éloignée du stator 3.

Comme visible sur les figures 1 et 2, chaque couche axiale multipolaire 7 se présente sous la forme d'une couronne.

Les couches 7 sont qualifiées de couches « axiales » car les couronnes sont disposées les unes à la suite des autres le long de l'axe longitudinal L.

Sur le mode de réalisation illustré, les couronnes 7 sont accolées les unes aux autres le long de l'axe longitudinal L. Alternativement, les couronnes 7 sont des parties d'un même élément monobloc.

La juxtaposition des couronnes 7 réduit l'encombrement du moteur électrique 1.

L'arbre moteur 6 traverse les couronnes 7 en leur centre.

Chaque couche axiale multipolaire 7 est configurée pour tourner autour de l'axe longitudinal L.

Sur le mode de réalisation illustré, chaque couche axiale multipolaire 7 comprend six pôles, soit 3 paires de pôles nord et sud, disposés de façon alternée (nord, sud, nord,...). Chaque pôle occupe une étendue angulaire de 60° (soit 360° de la couche axiale / 6 pôles = 60°).

Les trois capteurs de position 9 sont répartis de manière à déterminer les six instants de commutation des bobines d'excitation électromagnétique du stator par rotation à 360°.

Les six étapes de commutation correspondent à une rotation de 360° électriques, c'est-à-dire une rotation complète de 360° du rotor dans le cas où l'aimant permanent comprend une seule paire de pôles. Dans le cas d'un aimant comprenant deux paires de pôles, les six étapes de commutation, correspondant à 360° électriques, correspondent à une rotation de 180° du rotor et dans le cas d'un aimant comprenant trois paires de pôles comme représenté, les six étapes de commutation, correspondant à 360° électriques, correspondent à une rotation de 120° du rotor. Le passage d'une commutation à une autre est donc réalisé à chaque rotation d'un angle de 60° électriques de l'arbre moteur 6.

Les couches axiales multipolaires 7 sont en outre disposées de telle sorte qu'il existe un décalage angulaire entre les pôles d'un même type (nord et sud) sur au moins deux couches axiales multipolaires 7 successives, préférablement sur les trois couches axiales multipolaires 7 successives. Ce décalage angulaire entre les aimants de deux ou trois couches axiales multipolaires successives est fonction du nombre de paires de pôles des couches axiales multipolaires 7, et aussi fonction de la distance y référencée en figure 2 et décrite ci-dessous.

L'invention n'est toutefois pas limitée à une variante de réalisation dans laquelle chaque couche axiale 7 comprend six pôles. Les configurations à deux ou quatre pôles comme celles décrites précédemment, sont tout à fait possibles, de même que des configurations à plus de trois paires de pôles.

Comme visible sur les figures 1 et 2, le moteur électrique 1 comprend également un dispositif de détermination de position du rotor, référencé 8.

Le dispositif de détermination de position du rotor 8 comprend une pluralité de capteurs de position 9 de l'une des couches axiales multipolaires 7, chaque capteur de position 9 étant associé respectivement à l'une des couches axiales multipolaires 7.

De préférence, chaque capteur de position 9 est un capteur à effet Hall.

Comme visible sur les figures 1 et 2, un capteur à effet Hall référencé 9-1 est associé à la couche axiale multipolaire 7-1, un capteur à effet Hall référencé 9-2 est associé à la couche axiale multipolaire 7-2 et un capteur à effet Hall référencé 9-3 est associé à la couche axiale multipolaire 7-3.

Les capteurs à effet Hall 9 sont installés dans un plan P contenant une direction parallèle à l'axe longitudinal L en étant désalignés les uns relativement aux autres.

Le désalignement des capteurs à effet Hall 9 permet de conserver l'alignement d'un centre de chaque couche axiale multipolaire de l'aimant avec un centre respectif de chaque capteur à effet Hall, comme il va être détaillé ultérieurement.

Comme visible sur les figures 1 et 2, le moteur électrique 1 comprend également une carte de circuit imprimé 10.

L'une des faces 11 de la carte de circuit imprimé 10 contient le plan P.

La face 11 est disposée en regard du rotor 2.

Les capteurs à effet Hall 9 sont disposés sur la face 11 de la carte de circuit imprimé 10.

### Position des capteurs à effet Hall

La position des capteurs à effet Hall 9 va maintenant être détaillée en relation principalement avec la figure 2.

Chaque capteur à effet Hall 9 est monté de sorte à détecter les transitions successives des pôles opposés pendant la rotation du rotor 2 dans le stator 3.

Pour se faire, chaque capteur à effet Hall 9 est monté en regard de la couche axiale multipolaire 7 à laquelle il est associé.

De préférence, chaque capteur à effet Hall 9 est centré axialement relativement à la couche axiale multipolaire 7 à laquelle il est associé.

Comme visible sur la figure 2, chaque couronne 7 comprend une paroi longitudinale qu'un plan de symétrie orthogonal à l'axe longitudinal L divise virtuellement en deux régions semblables.

Pour chaque couronne 7, le plan de symétrie comprend une ligne médiane 14 le long de la paroi longitudinale.

La ligne médiane de la couche axiale multipolaire 7-1 est référencée 14-1, la ligne médiane de la couche axiale multipolaire 7-2 est référencée 14-2 et la ligne médiane de la couche axiale multipolaire 7-3 est référencée 14-3.

Ainsi, un centre 15-1 du capteur à effet Hall 9-1 est disposé en regard de la ligne médiane 14-1 de la couche axiale multipolaire 7-1.

Un centre 15-2 du capteur à effet Hall 9-2 est disposé en regard de la ligne médiane 14-2 de la couche axiale multipolaire 7-2.

Un centre 15-3 du capteur à effet Hall 9-3 est disposé en regard de la ligne médiane 14-3 de la couche axiale multipolaire 7-3.

De préférence, chacun des capteurs à effet Hall 9 est en regard exclusivement de la couche axiale multipolaire à laquelle il est associé.

Cette configuration permet d'assurer que chaque à effet Hall 9 ne soit sensible qu'aux transitions de pôles de la couche axiale multipolaire associée.

Comme plus précisément visible sur la figure 2, les capteurs à effet Hall 9 de position sont disposés en un triangle 16, chacun des capteurs à effet Hall 9-1, 9-2 et 9-3 constituant un sommet du triangle 16. Plus préférablement, chaque centre 15-1, 15-2, 15-3 de chaque capteur 9-1, 9-2, 9-3 constitue un sommet du triangle 16. Plus préférablement encore, ledit triangle est scalène ou isocèle.

Sur le mode de réalisation illustré, les capteurs à effet Hall 9-1 et 9-3 sont alignés dans une direction parallèle à l'axe longitudinal L.

Comme visible sur la figure 2, les capteurs à effet Hall 9 sont sensiblement parallélépipédiques.

Un bord long 17-1 du capteur à effet Hall 9-1 est sensiblement aligné avec un bord long 17-3 du capteur à effet Hall 9-3 le long d'une direction référencée D.

Les bords longs 17-1 et 17-3 font face à un bord long 17-2 du capteur à effet Hall 9-2.

De préférence, la distance y qui sépare le bord long 17-2 de la direction D est la plus faible possible. Cette distance y résulte essentiellement des limites techniques du procédé d'assemblage du moteur. En effet, cette distance y résulte du fait qu'il faut d'une part tenir puis positionner chaque capteur 9 avant et pendant sa fixation sur la carte 10, et d'autre part correctement fixer chaque capteur 9 sur la carte de circuit imprimé 10, par exemple par soudure. Les capteurs 9 doivent être suffisamment espacés pour que la machine d'assemblage puisse les maintenir avant et pendant leur positionnement puis fixation sur la carte 10, et ils ne peuvent pas être soudés l'un sur l'autre.

### Avantages

Grâce au désalignement des capteurs à effet Hall selon la présente invention, il est possible de réduire la taille, notamment l'épaisseur, des couches axiales multipolaire de l'aimant multipolaire tout en assurant le suivi de la position de chacune des couches.

Au contraire, une configuration alignée des capteurs est un obstacle à la réduction de taille, notamment d'épaisseur, des couches axiales multipolaires, puisque dans ce cas, la largeur de chaque couche axiale multipolaire est au minimum égale à la distance entre deux capteurs à effet Hall. En outre, une certaine distance est nécessaire entre les capteurs pour réaliser leur fixation correcte sur la carte de circuit imprimé, notamment par soudure.

## Revendications

1. Moteur électrique à courant continu sans balais pour système d'essuyage de véhicule automobile, comportant un stator (3) et un rotor (2), le stator (3) comprenant une pluralité de bobines d'excitation électromagnétique (4) du rotor (2) et le rotor (2) comprenant un aimant multipolaire (5) monté pour être animé d'un mouvement de rotation autour d'un axe de rotation (L) et muni d'au moins trois couches axiales multipolaires (7), chaque couche axiale multipolaire (7) se présentant sous la forme d'une couronne, et ledit moteur électrique comprenant un arbre moteur (6) qui traverse chaque couronne en son centre, le moteur électrique (1) comprenant un dispositif de détermination de position du rotor (8), ledit dispositif de détermination de position du rotor (8) comprenant au moins trois capteurs de position (9) de l'une desdites au moins trois couches axiales multipolaires (7), chaque capteur de position (9) étant associé respectivement à l'une des couches axiales multipolaires (7) avec un centre (15-1, 15-2, 15-3) de chaque capteur (9-1, 9-2, 9-3) étant disposé respectivement dans un plan contenant une ligne médiane (14-1, 14-2, 14-3) d'une couche axiale multipolaire (7-1, 7-2, 7-3), les capteurs de position (9) étant installés dans un plan (P) contenant une direction parallèle à l'axe de rotation de l'aimant multipolaire (5) **caractérisé en ce que** lesdits capteurs de position sont disposés en un triangle (16), chacun des centres (15-1, 15-2, 15-3) des capteurs (9-1, 9-2, 9-) constituant un sommet du triangle (16), ledit triangle étant scalène ou isocèle.

2. Moteur électrique selon la revendication précédente, dans lequel ledit triangle (16) est scalène aigu.

3. Moteur électrique selon l'une quelconque des revendications précédentes, dans lequel ledit triangle (16) est isocèle aigu.

4. Moteur électrique selon l'une quelconque des revendications précédentes, comprenant une carte de circuit imprimé (10), les capteurs de position (9) étant disposés sur ladite carte de circuit imprimé (10).

5. Moteur électrique selon l'une quelconque des revendications précédentes, dans lequel chaque couche axiale multipolaire (7) comprend au moins une paire de pôles magnétiques nord et sud, de préférence trois paires de pôles nord et sud.

6. Moteur électrique selon la revendication précédente, dans lequel les couches axiales multipolaires (7) sont disposées le long de l'axe de rotation (L) de telle sorte qu'il existe un décalage angulaire entre les pôles nord et sud sur au moins deux couches axiales multipolaires (7) successives, préférablement sur les trois couches axiales multipolaires successives.

7. Moteur électrique selon l'une quelconque des revendications précédentes, dans lequel les couches axiales multipolaires (7) présentent une même épaisseur.

8. Moteur électrique selon l'une quelconque des revendications précédentes, dans lequel l'aimant multipolaire (5), qui comprend les couches axiales multipolaires (7) successives, est un élément monobloc.

9. Moteur électrique selon la revendication précédente, dans lequel les couches axiales multipolaires (7) sont respectivement formées par magnétisation de tronçons de l'élément monobloc.

10. Moteur électrique selon l'une quelconque des revendications 1 à 7, dans lequel les couches axiales multipolaires (7) sont chacune formée par une pièce rapportée.

11. Moteur électrique selon la revendication précédente en combinaison avec la revendication 5, dans lequel les pièces rapportées formant les couches axiales multipolaires (7) sont identiques et disposées le long de l'axe de rotation (L) avec un décalage angulaire entre les pôles nord et sud sur au moins deux couches axiales multipolaires (7) successives, préférablement sur les trois couches axiales multipolaires successives.

12. Moteur électrique selon l'une quelconque des revendications précédentes, dans lequel chaque capteur de position (9) est un capteur à effet Hall.

## Patentansprüche

1. Bürstenloser Gleichstrom-Elektromotor für ein Scheibenreinigungssystem eines Kraftfahrzeugs, umfassend einen Stator (3) und einen Rotor (2), wobei der Stator (3) eine Vielzahl von Spulen zur elektromagnetischen Erregung (4) des Rotors (2) beinhaltet und der Rotor (2) einen mehrpoligen Magneten (5) beinhaltet, der dazu montiert ist, mit einer Drehbewegung um eine Drehachse (L) angetrieben zu werden, und über mindestens drei mehrpolige axiale Schichten (7) verfügt, wobei jede mehrpolige axiale Schicht (7) in Form eines Kranzes vorliegt, und wobei der Elektromotor eine Motorwelle (6) beinhaltet, die jeden Kranz in seiner Mitte durchquert, wobei der Elektromotor (1) eine Vorrichtung zur Lagebestimmung des Rotors (8) beinhaltet, wobei die Vorrichtung zur Lagebestimmung des Rotors (8) mindestens drei Lagesensoren (9) für eine der mindestens drei mehrpoligen axialen Schichten (7) beinhaltet, wobei jeder Lagesensor (9) jeweils mit einer der mehrpoligen axialen Schichten (7) assoziiert ist, wobei eine Mitte (15-1, 15-2, 15-3) jedes Sensors (9-1, 9-2, 9-3) jeweils in einer Ebene angeordnet ist, die eine Mittellinie (14-1, 14-2, 14-3) einer mehrpoligen axialen Schicht (7-1, 7-2, 7-3) enthält, wobei die Lagesensoren (9) in einer Ebene (P) installiert sind, die eine zu der Drehachse des mehrpoligen Magneten (5) parallele Richtung enthält, **dadurch gekennzeichnet, dass** die Lagesensoren in einem Dreieck (16) angeordnet sind, wobei jede der Mitten (15-1, 15-2, 15-3) der Sensoren (9-1, 9-2, 9-) eine Spitze des Dreiecks (16) bildet, wobei das Dreieck ungleichseitig oder gleichschenklig ist.

2. Elektromotor nach dem vorhergehenden Anspruch, wobei das Dreieck (16) ungleichseitig und spitzwinklig ist.

3. Elektromotor nach einem der vorhergehenden Ansprüche, wobei das Dreieck (16) gleichschenklig und spitzwinklig ist.

4. Elektromotor nach einem der vorhergehenden Ansprüche, der eine Leiterplatte (10) beinhaltet, wobei die Lagesensoren (9) auf der Leiterplatte (10) angeordnet sind.

5. Elektromotor nach einem der vorhergehenden Ansprüche, wobei jede mehrpolige axiale Schicht (7) mindestens ein Paar aus einem Nord- und einem Südmagnetpol, vorzugsweise drei Paare aus einem Nord- und einem Südpol beinhaltet.

6. Elektromotor nach dem vorhergehenden Anspruch, wobei die mehrpoligen axialen Schichten (7) so entlang der Drehachse (L) angeordnet sind, dass zwischen den Nord- und Südpolen auf mindestens zwei aufeinanderfolgenden mehrpoligen axialen Schichten (7), vorzugsweise auf den drei aufeinanderfolgenden mehrpoligen axialen Schichten, ein Winkelversatz besteht.

7. Elektromotor nach einem der vorhergehenden Ansprüche, wobei die mehrpoligen axialen Schichten (7) eine gleiche Dicke aufweisen.

8. Elektromotor nach einem der vorhergehenden Ansprüche, wobei der mehrpolige Magnet (5), der die aufeinanderfolgenden mehrpoligen axialen Schichten (7) beinhaltet, ein einstückiges Element ist.

9. Elektromotor nach dem vorhergehenden Anspruch, wobei die mehrpoligen axialen Schichten (7) jeweils durch Magnetisierung von Abschnitten des einstückigen Elements gebildet sind.

10. Elektromotor nach einem der Ansprüche 1 bis 7, wobei die mehrpoligen axialen Schichten (7) jeweils durch ein Aufsteckteil gebildet sind.

11. Elektromotor nach dem vorhergehenden Anspruch in Kombination mit Anspruch 5, wobei die Aufsteckteile, die die mehrpoligen axialen Schichten (7) bilden, identisch sind und entlang der Drehachse (L) mit einem Winkelversatz zwischen den Nord- und Südpolen auf mindestens zwei aufeinanderfolgenden mehrpoligen axialen Schichten (7), vorzugsweise auf den drei aufeinanderfolgenden mehrpoligen axialen Schichten, angeordnet sind.

12. Elektromotor nach einem der vorhergehenden Ansprüche, wobei jeder Lagesensor (9) ein Hall-Sensor ist.

## Claims

1. Brushless DC electric motor for a wiper system of an automotive vehicle, including a stator (3) and a rotor (2), the stator (3) comprising a plurality of coils (4) for electromagnetically exciting the rotor (2) and the rotor (2) comprising a multipole magnet (5) that is mounted so as to be driven in rotation about an axis of rotation (L) and provided with at least three multipole axial layers (7), each multipole axial layer (7) taking the form of a crown, and in which said electric motor comprises a motor shaft (6) which passes through the centre of each crown, the electric motor (1) comprising a device (8) for determining the position of the rotor, said device (8) for determining the position of the rotor comprising at least three position sensors (9) for detecting the position of one of said at least three multipole axial layers (7) in which a centre (15-1, 15-2, 15-3) of each sensor (9-1, 9-2, 9-3) is positioned, respectively, in a plane containing a medial line (14-1, 14-2, 14-3) of a multipole axial layer (7-1, 7-2, 7-3), each position sensor (9) being associated, respectively, with one of said multipole axial layers (7), the position sensors (9) being installed in a plane (P) containing a direction that is parallel to the axis of rotation of the multipole magnet (5), **characterized in that** said position sensors are disposed in a triangle (16), each of the centres (15-1, 15-2, 15-3) of the sensors (9-1, 9-2, 9-3) constituting a vertex of the triangle (16), said triangle (16) being scalene or isosceles.

2. Electric motor according to the preceding claim, in which said triangle (16) is acute scalene.

3. Electric motor according to any one of the preceding claims, in which said triangle (16) is acute isosceles.

4. Electric motor according to any one of the preceding claims, comprising a printed circuit board (10), the position sensors (9) being positioned on said printed circuit board (10).

5. Electric motor according to any one of the preceding claims, in which each multipole axial layer (7) comprises at least one pair of north and south magnetic poles, preferably three pairs of north and south poles.

6. Electric motor according to the preceding claim, in which the multipole axial layers (7) are positioned along the axis of rotation (L) such that there is an angular offset between the north and south poles on at least two successive multipole axial layers (7), preferably on three successive multipole axial layers.

7. Electric motor according to any one of the preceding claims, in which the thicknesses of the multipole axial layers (7) are the same.

8. Electric motor according to any one of the preceding claims, in which the multipole magnet (5), which comprises the successive multipole axial layers (7), is an element formed as a single piece.

9. Electric motor according to the preceding claim, in which the multipole axial layers (7) are formed by magnetizing respective segments of the element formed as a single piece.

10. Electric motor according to any one of Claims 1 to 7, in which the multipole axial layers (7) are each formed by an added part.

11. Electric motor according to the preceding claim in combination with claim 5, in which the added parts forming the multipole axial layers (7) are identical and positioned along the axis of rotation (L) with an angular offset between the north and south poles on at least two successive multipole axial layers (7), preferably on three successive multipole axial layers.

12. Electric motor according to any one of the preceding claims, in which each position sensor (9) is a Hall effect sensor.
